# EUROPEAN PATENT APPLICATION

(11) **EP 3 664 265 A1**
(43) Date of publication of application: **10.06.2020**
(21) Application number: 19213761.0
(22) Date of filing: 05.12.2019
(51) Int. Cl.: H02K 16/00, D06F 58/08, H02K 1/27, H02K 5/15

(54) **ENHANCED MOTOR ASSEMBLY FOR CLOTHES DRYER MACHINE AND CLOTHES DRYER MACHINE COMPRISING SAID ASSEMBLY**

(30) Priority: 05.12.2018 EP 18425094
(71) Applicant: Askoll Holding S.r.l. a socio unico, 36031 Povolaro di Dueville (VI) (IT)
(72) Inventor: MARIONI, Elio, 36031 Dueville (VI) (IT)
(74) Representative: Antonucci, Emanuele

(57) **Abstract**

A motor assembly (1) for clothes dryer machine, comprising: a main body (6) mounted tilting with respect to the frame of a clothes dryer machine; a driving shaft (2) that crosses said main body (6) and comprises a support end (21) hinged to said frame and a free end (22) which an air movement fan is coupled to; a first electric motor (3) comprising a first internal rotor (35) integral with said driving shaft (2) and a first outer stator (30) integral with the main body (6); a second electric motor (4) comprising in turn a second internal rotor (45) integral with a transmission sleeve (50) and a second outer stator (40) integral with said main body (6); said transmission sleeve (50) being mounted coaxial on the driving shaft (2) and comprising, on a portion outside said main body (6), a pulley (5) for actuating a drum of said clothes dryer machine.

## Description

### Field of application

The present invention, in its more general aspect, relates to a motor assembly which allows the operation of a clothes dryer machine.

Therefore, the technical field of the invention relates to clothes dryer machines. It should be noted that the generic term "clothes dryer machine" used in the present description is intended to also include machines which, in addition to the drying function, also integrates a washing function of the laundry.

### Prior art

Clothes dryer machines of the various kind and type are used both in the domestic and industrial areas to remove moisture from garments and/or other textile products, usually following a washing cycle performed thereon.

Said clothes dryer machines have a rotating drum intended to house the laundry to be dried. The machine further comprises at least one hot-air ventilation system introduced in the drum with a drying function. In some types of condensing clothes dryer machines, a second cold-air ventilation system is also provided, which is intended, through a heat exchanger, to dehumidify the drying air for a subsequent recirculation in the rotating drum.

The above described machines thus comprise two motorized components: the rotating drum and an air movement fan.

Traditionally, in compliance with a criterion of economy and simplicity of construction, a single electric motor for the motorization of all the above components has been used.

In particular, the fan is keyed on a driving shaft, which the rotating drum is also connected to by means of a belt transmission. The driving shaft is integral with the rotor of an electric motor, the latter being supported in a tilting manner by the frame of the clothes dryer machine.

Said constructive configuration, called indirect drive configuration by contrast to the direct drive configuration with a motor directly acting on the drum, is currently used in most machines available on the market. It rigidly constrains the speed of the fan to that of the drum, but this compromise is traditionally accepted in favour of the constructive economy of the assembly.

However, the current optimization needs, driven by the developments in the regulations on the energy classification of household appliances, have made the above speed constraint critical.

Ideally, in fact it would be preferable to be capable of varying the speed of the ventilation fan based on the phases of the drying cycle and totally independently with respect to the revolutions of the drum.

Moreover and especially, the speed constraint forces to non-optimal design choices, thus preventing the adoption of fans of large dimensions with a limited number of revolutions per minute, which would allow developing a high torque by moving large volumes of air.

By the way, the use of a separate motor for the ventilation fan forces to a complete re-design of the entire clothes dryer machine, inside which the housings are specifically designed for the dimensions of the traditional system. Said re-design is economically onerous and furthermore raises potential compatibility problems with the spare parts available on the market.

The technical problem underlying the present invention is therefore to conceive a motor assembly which allows solving the above described drawbacks of the prior art, and in particular which allows improving the energy effectiveness of the clothes dryer machine without resort to a re-design of the entire appliance.

### Summary of the invention

The above identified technical problem is solved by a motor assembly for a clothes dryer machine, comprising: a main body or casing arranged to be mounted tilting with respect to a frame of a clothes dryer machine; a driving shaft that crosses said main body and is associable rotatably to said frame, wherein said driving shaft comprises a support end hinged to said frame and a free end which an air movement fan is couplable to; a first electric motor comprising a first internal rotor integral with said driving shaft and a first outer stator integral with the main body; a second electric motor comprising in turn a second internal rotor integral with a transmission sleeve and a second outer stator integral with said main body; said transmission sleeve being rotatably coupled above said driving shaft and comprising, on a portion outside said main body, a pulley for actuating a drum of said clothes dryer machine.

It should be noted how the assembly described above appears compact and insertable in the dimensions of the dryer machines currently available on the market.

The pulley is preferably located near the support end of the driving shaft.

This ensures an optimal operation of the assembly avoiding deflections on the shaft at the traction point defined by the pulley itself.

Preferably, said main body or housing comprises a partition, a first cover and a second cover.

In particular, the partition may define an intermediate support point on the shaft and a spacer between the two motors, whereas the respective covers cover the two electric motors on both sides.

Preferably, the first outer stator is interposed between the first cover and the partition, whereas the second outer stator is interposed between the second cover and the partition.

It should be noted how advantageous is to directly lock the outer stators between the elements constituting the main body.

The main body preferably comprises at least the above partition, said first outer stator and said second outer stator being crossed and kept in position by peripheral connection screws, said connection screws crossing, between the first outer stator and the second outer stator, said partition.

In this way, a pack of the assembly is obtained, which fixes the two stators in position, thus obtaining an economic but reliable construction.

Preferably, in this case the partition comprises a plurality of spacers, each of which houses a connection screw in its intermediate length, said spacers being connected to an intermediate hub supported by the driving shaft.

The spacers may advantageously be connected to the intermediate hub through radial arms, maintaining a partially open structure that prevents the internal components from overheating.

Preferably, an intermediate bearing, for instance a ball bearing, is interposed between the driving shaft and the intermediate hub.

Preferably, the connection screws cross a first statoric pack of the first outer stator and a second statoric pack of the second outer stator, respectively.

In other words, the stator portion being crossed by the screws is directly the statoric pack, which may be made in a *per se* known way as a pack of laminations of ferromagnetic material. In this case, the laminations will have holes in peripheral positions (for example at the four corners of a substantially squared profile) for the passage of the connection screws.

Preferably, the main body also comprises the above first cover, whose function is to cover at least partially said first electric motor, and which may comprise a flanged ring crossed by said connection screws and coupled to an end hub supported by the driving shaft.

The first cover may advantageously comprise an eccentric portion which a tightening pulley of the driving belt, *per se* known, is mounted to.

Preferably, a head bearing, for instance a ball bearing, is mounted between the driving shaft and the end hub.

The flanged ring is preferably connected to the end hub through spokes, which leave open ventilation spaces for the first electric motor.

Finally, the main body may advantageously also comprise the above second cover, to cover at least partially said second electric motor. The second cover may comprise in this case an annular flange crossed by said connection screws and at least one central hole for the passage of the transmission sleeve.

Preferably, the transmission sleeve is supported on the driving shaft by two bearings, for instance ball bearings, inserted in as many end slots.

Preferably, said internal first and said second rotors comprise both a plurality of permanent magnets.

The previously identified technical problem is also solved by a clothes dryer machine comprising: a rotating drum, which is mounted rotatably with respect to a frame and is intended to house laundry to be dried; and at least one air movement fan, said clothes dryer machine comprising a motor assembly of the previously described type.

Further features and advantages of the present invention will be clearer from the following description of a preferred embodiment given by way of non-limiting example with reference to the enclosed drawings.

### Brief description of the drawings

Figure 1 schematically shows a clothes dryer machine according to the present invention;
figure 2 shows a side view of a motor assembly according to the present invention;
figure 3 shows a cross-sectional and partially exploded view of the motor assembly according to the present invention;
figure 4 shows a perspective view of the motor assembly according to the present invention;
figure 5 shows a partially exploded cross-sectional view of the motor assembly according to the present invention.

### Detailed description

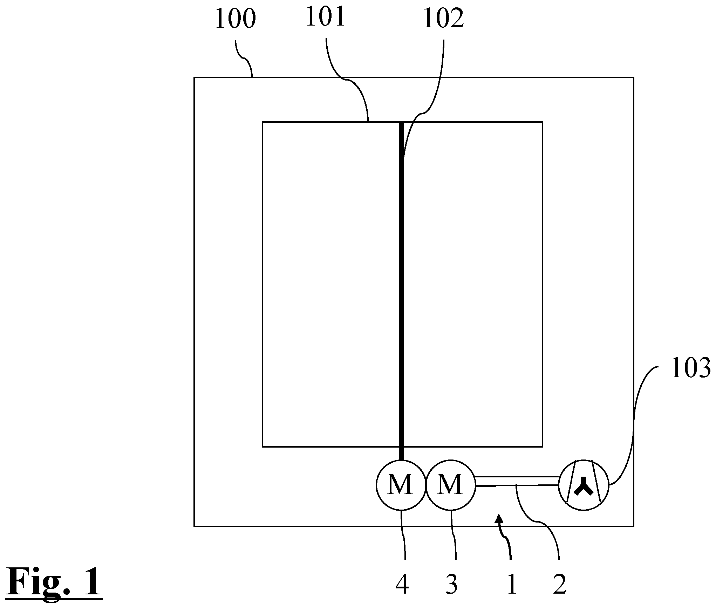

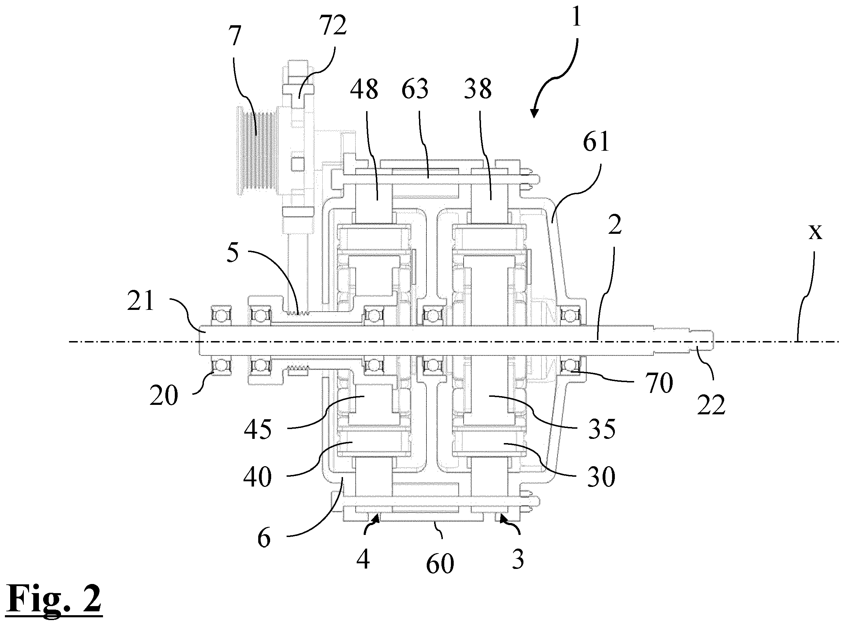

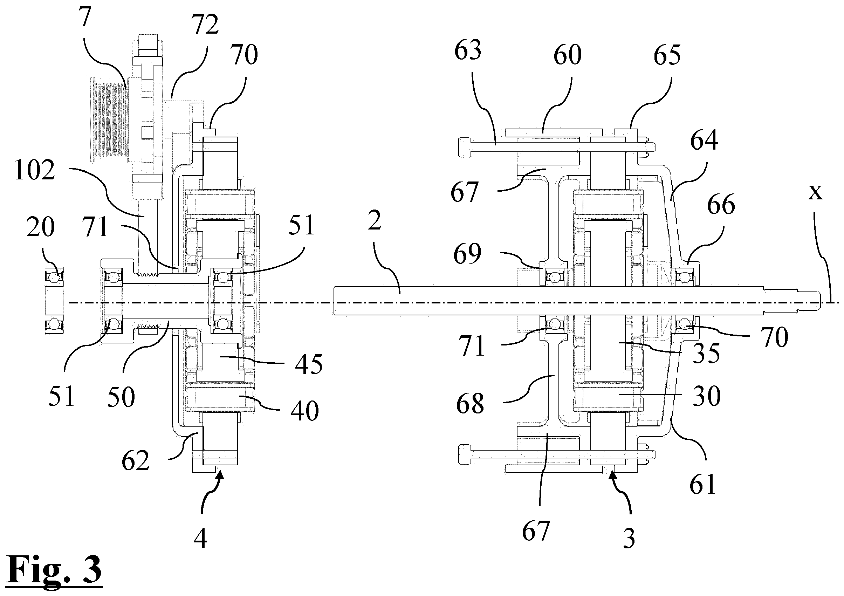

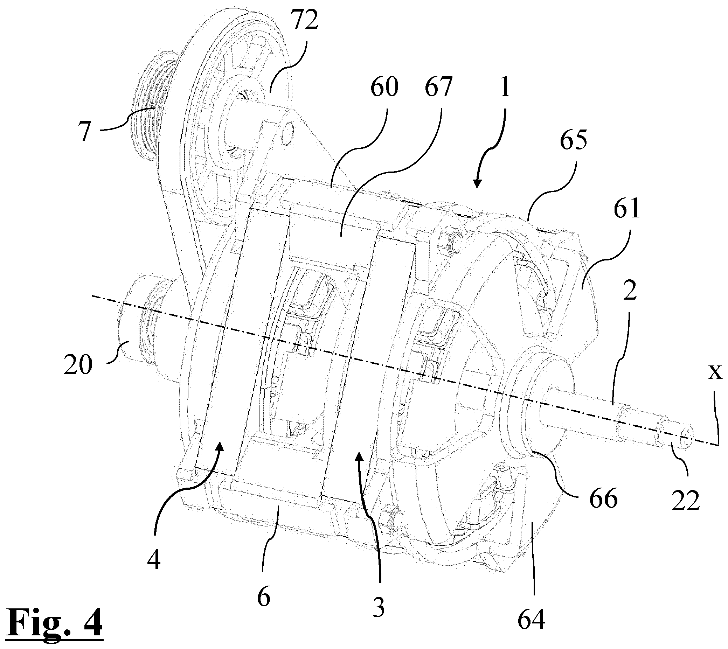

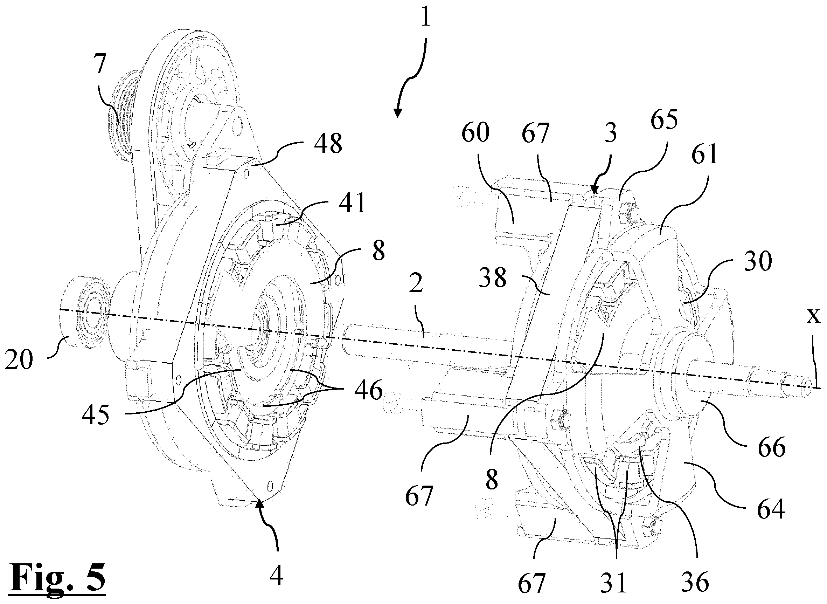

With reference to the enclosed figures 1-5, a first embodiment of a motor assembly of a clothes dryer machine is generically indicated by reference number 1.

The clothes dryer machine as a whole is schematically represented in figure 1.

Inside a frame 100 of the machine at least one air path intercepted by an air movement fan 103 is defined, said air movement fan 103 being keyed on a driving shaft 2 dragged in rotation by a first electric motor 3.

The clothes dryer machine further comprises a rotating drum 101, which is mounted rotatably with respect to a frame of the machine and which is intended to house a load of laundry to be dried. Said rotating drum is connected to a second electric motor 4 by means of a transmission belt 102.

Thus, the motor assembly 1 comprises a driving shaft 2 having longitudinal axis x. It is rotatably associated with the frame 100 of the clothes dryer machine by means of one or more ball bearings 20 which are surrounded by a rubber antivibration ring, at least one of which is arranged at a support end 21. At the opposite free end 22, the bearing is arranged to key the air movement fan 103.

In an intermediate portion of the driving shaft 2 both the first electric motor 3 and the second electric motor 4 are arranged.

The two electric motors 3, 4 are preferably permanent-magnet synchronous electric motors of three-phase type.

Both of them have an outer stator, a first outer stator 30 and a second outer stator 40, respectively, and an internal rotor, a first internal rotor 35 and a second internal rotor 45, respectively.

The outer stator 30, 40 of both electric motors 3, 4 comprises a statoric pack 38, 48 of laminations, which are squared in shape and with rounded corners, crossed at the corners by four holes for the insertion of connection screws 63. From this core twelve squared-section arms 31, 41 depart out, which define the stator magnetic poles. The arms 31, 41 of the annular core are inserted inside spools, on which the electric windings of the stator are arranged in a manner *per se* known.

The internal rotor 35, 45 of both electric motors 3, 4 comprises a cylindrical outer surface, which supports a plurality of permanent magnets 36, 46 shaped like an arc of a circle. The magnet faces the polar expansions of the respective outer stator 30, 40 and is divided therefrom by an air gap of suitable amplitude.

It should be noted that, even if in the present embodiments the two electric motors 3, 4 are represented with identical size and power, they may have different power and size according to the specific project needs.

The outer stators 30, 40 of the two electric motors 3, 4 are supported by a same main body 6 or housing, made by a partition 60, a first cover 61 and a second cover 62.

The partition 60 and the two covers 61, 62 are packed to each other by means of the four peripheral connection screws 63, which also cross the statoric packs 38, 48 of the electric motors. Between the first cover 61 and the partition 60 the first statoric pack 38 is interposed, whereas between the second cover 62 and the partition 60 the second statoric pack 48 is interposed.

The first cover 61 has a flanged ring 65 connected to an end hub 66 by means of four spokes 64. The end hub 66 houses a head bearing 70 supported by the driving shaft 2.

Il partition 60 has four spacers 67 which house the bodies of the connection screws 63 between a cover 61 and the subsequent one 62. The spacers 67 are connected through radial arms 68 to an intermediate hub 69. The intermediate hub 69 houses an intermediate bearing 71 supported by the driving shaft 2.

Finally, the second cover 62 has a cup structure, with an annular flange 70 and a central hole 71. The latter allows the passage of the driving shaft 2 and of a transmission sleeve 50 that is coaxial to the driving shaft 2.

The second cover 62 also comprises an eccentric portion 72, which projects sideways relative to the main body 6. This portion supports an idler pulley 7.

The transmission sleeve 50 is placed above the driving shaft 2 with two interposed bearings 51. The two bearings 51 are housed in as many end slots of the transmission sleeve 50. In contrast to the end slot inside the main body, the transmission sleeve 50 is integral with the second internal rotor 45, arranged to bring it in rotation. On the outer portion of the transmission sleeve 50, a pulley 5 is instead provided, which is equipped with a plurality of transmission throats and whereon a transmission belt 102 wounds, which is arranged to put the rotating drum 101 in rotation.

The first internal rotor 35 is directly keyed on the driving shaft 2, so that the rotation of the first electric motor 3 drags the fan keyed on the free end 22 in rotation.

The main body 2 may house, besides the two electric motors 3, 4, one or two control boards 8 for the motors. Alternatively, the two electric motors 3, 4 may be controlled remotely; in this case, the control boards are replaced by two small connection boards 8, each of which is intended to receive the power supply directed to the windings.

Obviously, a skilled person may make several changes and variants to the above described mechanical assembly and appliance, in order to meet contingent and specific needs, all of them by the way contained in the scope of protection of the invention as defined by the following claims.

## Claims

1. Motor assembly (1) for clothes dryer machine, comprising: a main body (6) arranged to be mounted tilting with respect to a frame (100) of a clothes dryer machine; a driving shaft (2) that crosses said main body (6) and is rotatably associable with said frame (100), wherein said driving shaft (2) comprises a support end (21) hinged to said frame (100) and a free end (22) which an air movement fan (103) is couplable to; a first electric motor (3) comprising a first internal rotor (35) integral with said driving shaft (2) and a first outer stator (30) integral with said main body (6); a second electric motor (4) comprising in turn a second internal rotor (45) integral with a transmission sleeve (50) and a second outer stator (40) integral with said main body (6); said transmission sleeve (50) being rotatably coupled above said driving shaft (2) and comprising, on a portion outside said main body (6), a pulley (5) for actuating a drum (101) of said clothes dryer machine.

2. Motor assembly (1) according to claim 1, wherein said pulley (5) is located near the support end (21) of the driving shaft (2).

3. Motor assembly (1) according to one of the preceding claims, wherein said main body comprises a partition (60), a first cover (61) and a second cover (62).

4. Motor assembly (1) according to claim 3, wherein said first outer stator (30) is interposed between the first cover (61) and the partition (60), said second outer stator (40) is interposed between the second cover (62) and the partition (60).

5. Motor assembly (1) according to one of the preceding claims, wherein said main body (6) comprises a partition (60), said first outer stator (30) and said second outer stator (40) being crossed and kept in position by peripheral connection screws (63), said connection screws (63) crossing, between the first outer stator (30) and the second outer stator (40), said partition (60).

6. Motor assembly (1) according to claim 5, wherein said partition (60) comprises a plurality of spacers (67), each of which houses a connection screw (63), said spacers (67) being connected to an intermediate hub (69) supported by the driving shaft (2).

7. Motor assembly (1) according to claim 6, wherein an intermediate bearing (71) is interposed between the driving shaft (2) and the intermediate hub (69).

8. Motor assembly (1) according to one of claims 5-7, wherein said connection screws (63) cross a first statoric pack (38) of the first outer stator (30) and a second statoric pack (48) of the second outer stator (40), respectively.

9. Motor assembly (1) according to one of claims 5-8, wherein said main body (6) further comprises a first cover (61) for covering at least partially said first electric motor (3), said first cover (61) comprising a flanged ring (65) crossed by said connection screws (63) and coupled to an end hub (66) supported by the driving shaft (2).

10. Motor assembly (1) according to claim 9, wherein a head bearing (70) is interposed between the driving shaft (2) and the end hub (66).

11. Motor assembly (1) according to one of claims 9 or 10, wherein said flanged ring (65) is coupled to the end hub (66) through spokes (64) which leave open ventilation spaces for the first electric motor (3).

12. Motor assembly (1) according to claim 8, wherein said main body (6) further comprises a second cover (62) for covering at least partially said second electric motor (4), said second cover (62) comprising an annular flange (70) crossed by said connection screws (63) and at least one central hole (71) for the passage of the transmission sleeve (50).

13. Motor assembly (1) according to one of the preceding claims, wherein the transmission sleeve (50) is supported on the driving shaft (2) by two bearings (51) inserted in as many end slots.

14. Motor assembly (1; 1') according to any one of the preceding claims, wherein said first and said second internal rotors (35, 45) comprise both a plurality of permanent magnets (36, 46).

15. Clothes dryer machine comprising: a rotating drum (101), mounted rotatably with respect to a frame (100) and intended to house laundry to be dried; and at least one air movement fan (103), said clothes dryer machine comprising a motor assembly (1) according to any one of the preceding claims.
